# EUROPÄISCHE PATENTANMELDUNG

(11) **EP 3 246 233 A1**
(43) Veröffentlichungstag der Anmeldung: **22.11.2017**
(21) Anmeldenummer: 17167934.3
(22) Anmeldetag: 25.04.2017
(51) Int. Cl.: B62J 7/04

(54) **GEPÄCKHALTERUNG FÜR FAHRRÄDER**

(30) Priorität: 30.04.2016 DE 202016002829 U
(71) Anmelder: Canyon Bicycles GmbH, 56073 Koblenz (DE)
(72) Erfinder: Vogt, Stephan, 56073 Koblenz (DE)
(74) Vertreter: dompatent von Kreisler Selting Werner - Partnerschaft von Patent- und Rechtsanwälten mbB

(57) **Zusammenfassung**

Eine Gepäckhalterung für Fahrräder, die insbesondere für Fahrräder mit ungefedertem Hinterbau geeignet ist, weist ein Gepäckaufnahmeelement (40) zu Aufnahme und/oder Befestigung von Gepäck auf. In montiertem Zustand ist zwischen dem Gepäckaufnahmeelement (40) und einem Fahrradrahmenelement (24) wie einem Gepäckträger mindestens ein Verbindungselement (32, 38) vorgesehen. Das mindestens eine Verbindungselement (32, 38) ist gelenkig mit dem Fahrradrahmenelement (24) und/oder dem Gepäckaufnahmeelement (40) verbunden. Vorzugsweise weisen die Verbindungselemente integrierte Dämpfungselemente (54, 62) auf.

## Beschreibung

Die Erfindung betrifft eine Gepäckhalterung für Fahrräder.

Beim Transport von Gepäck mittels Fahrrädern besteht bei ungefederten Fahrrädern bzw. bei Fahrrädern, die nur eine gefederte Fahrradgabel aufweisen, die Problematik, dass am Gepäckträger fixiertes Gepäck die Fahreigenschaften stark beeinträchtigt. Das Gepäck stellt hierbei eine ungefederte Masse dar, wobei die Federung ausschließlich durch die Reifen erfolgt. Um zumindest eine gewisse Federung zu erzielen, muss der Luftdruck der Reifen relativ gering sein. Dies erhöht jedoch die Gefahr von Reifendurchschlägen beim Überfahren von Hindernissen, wie Bordsteinkanten und dergleichen. Bei verhältnismäßig schwerem Gepäck muss daher der Reifendruck erhöht werden. Dies verringert den Fahrkomfort. Aufgrund der großen ungefederten Masse und insbesondere in Verbindung mit einem hohen Reifendruck führt dies insbesondere bei unebenen Fahrbahnen dazu, dass die Bodenhaftung und somit die Fahrsicherheit beeinträchtigt werden. Des Weiteren ist es nachteilig, große Massen fest mit dem Gepäckträger zu verbinden, da hierdurch große Kräfte und Momente in den Gepäckträger eingeleitet werden. Dies führt zur starken Belastung des Gepäckträgers und insbesondere zur starken Belastung von Verbindungsstellen zwischen dem Gepäckträger und dem Rahmen wie beispielsweise zwischen dem Gepäckträger und dem Sattelrohr des Rahmens.

Aus EP 1373057 ist ein gefederter Gepäckträger bekannt. Dieser weist den Vorteil auf, dass das mit dem Gepäckträger verbundene Gepäck beispielsweise beim Überfahren von Hindernissen gefedert und die Bewegung gedämpft ist. Ein derart gefederter Gepäckträger verbessert die Fahrsicherheit. Allerdings handelt es sich hierbei um eine verhältnismäßig aufwendige, teure und auch schwere Konstruktion.

Aufgabe der Erfindung ist es, eine leichte Gepäckhalterung für Fahrräder zu schaffen.

Die Lösung der Aufgabe erfolgt erfindungsgemäß durch die Merkmale des Anspruchs 1.

Die erfindungsgemäße Gepäckhalterung für Fahrräder weist ein Gepäckaufnahmeelement auf. An dem Gepäckaufnahmeelement kann das Gepäck befestigt werden. Beispielsweise handelt es sich bei dem Gepäck um Packtaschen, die mit dem Gepäckaufnahmeelement verbunden werden, in dieses eingehängt werden oder dergleichen. Auch kann das Gepäckaufnahmeelement derart ausgestaltet sein, dass beispielsweise über Spanngurte oder dergleichen beliebige Gepäckstücke an ihm befestigt werden können. Das Gepäckaufnahmeelement der erfindungsgemäßen Gepäckhalterung ist mit mindestens einem Verbindungselement verbunden. Das Verbindungselement dient zum Verbinden des Gepäckaufnahmeelements mit einem Fahrradrahmenelement. Bei dem Fahrradrahmenelement kann es sich beispielsweise um einen starr mit dem Fahrradrahmen verbundenen Gepäckträger, ein Gabelrohr der Fahrradgabel oder beispielsweise auch ein Oberrohr handeln, wobei das Gepäck sodann in montiertem Zustand unterhalb des Oberrohrs angeordnet wäre. Erfindungsgemäß ist das mindestens eine Verbindungselement flexibel, insbesondere gelenkig mit dem Fahrradrahmenelement verbindbar und/oder mit dem Gepäckaufnahmeelement verbunden. Durch diese flexible, insbesondere gelenkige Verbindung mit dem Fahrradrahmenelement und/oder dem Gepäckaufnahmeelement ist eine Bewegung des mit dem Gepäckaufnahmeelement verbundenen Gepäcks möglich. Beispielsweise beim Überfahren von Hindernissen erfolgt somit insbesondere ein vertikales Bewegen des Gepäcks. Dies vermindert die in den Fahrradrahmen eingeleiteten Kräfte und Momente und verbessert ferner die Fahrsicherheit.

In bevorzugter Weiterbildung der Erfindung weist das mindestens eine Verbindungselement mindestens ein Dämpfungselement auf. Das Dämpfungselement ist entsprechend dem mindestens einen Verbindungselement in montiertem Zustand zwischen dem Gepäckaufnahmeelement und dem Fahrradelement angeordnet. Anders ausgedrückt ist das mindestens eine Dämpfungselement mit dem Gepäckaufnahmeelement verbunden und mit dem Fahrradelement verbindbar bzw. in montiertem Zustand ebenfalls verbunden. Die Verbindung erfolgt hierbei mittelbar oder unmittelbar. Durch das mindestens eine Dämpfungselement wird die auftretende Bewegung des Gepäcks gedämpft. Bei einem Dämpfungselement kann es sich beispielsweise um ein hydraulisches Dämpfungselement oder einen die Bewegung dämpfenden Elastomerkörper handeln. Beispielsweise sind mehrere Verbindungselemente vorgesehen, die eine insbesondere gelenkige Verbindung zwischen dem Gepäckaufnahmeelement und dem Fahrradrahmenelement realisieren, so dass eine insbesondere vertikale Bewegung des Gepäcks möglich ist. Zusätzlich ist sodann zumindest ein Dämpfungselement zwischen dem Gepäckaufnahmeelement und dem Fahrradrahmenelement vorgesehen, das die entsprechende auftretende Bewegung dämpft.

In einer besonders bevorzugten Weiterbildung der Erfindung ist in zumindest einem der Verbindungselemente das Dämpfungselement integriert. Beispielsweise ist es möglich, dass das Gepäckaufnahmeelement in einem oberen Bereich oder in einem oberen Trägerelement ohne Dämpfung mit entsprechenden gelenkig ausgestalteten Verbindungselementen mit dem Fahrradrahmenelement verbunden ist. Ein beispielsweise drittes unteres Verbindungselement kann sodann in bevorzugter Ausführungsform derart ausgebildet sein, dass es zusätzlich zu einer gelenkigen Verbindung zwischen dem Gepäckaufnahmeelement und dem Fahrradrahmenelement als Dämpfungselement ausgebildet ist. Bevorzugt ist es, dass sämtliche vorgesehen Verbindungselemente derart ausgebildet sind, dass ein Dämpfungselement integriert ist.

In besonders bevorzugter Ausführungsform ist das mindestens eine Verbindungselement derart aufgebaut, dass es ein erstes und ein zweites Verbindungsteil aufweist. Hierbei ist das erste Verbindungsteil mit dem Gepäckaufnahmeelement verbunden und das zweite Verbindungsteil mit dem Fahrradrahmenelement verbindbar bzw. in montiertem Zustand verbunden. Zwischen den beiden Verbindungsteilen ist ein insbesondere als Hebelelement ausgebildetes Element angeordnet, das eine Bewegung der beiden Teile relativ zueinander ermöglicht, wobei diese Bewegung gleichzeitig gedämpft wird. Beispielsweise können zwischen den beiden Verbindungsteilen Federn oder dergleichen vorgesehen sein. Besonders bevorzugt ist es, dass zwischen den beiden Verbindungsteilen ein oder mehrere Elastomerkörper angeordnet sind. Hierdurch erfolgt eine Dämpfung der Bewegung.

Das Hebelelement ist beispielsweise stabförmig ausgebildet und realisiert eine Verbindung zwischen den beiden Verbindungsteilen. Durch das Hebelelement wird somit eine Hebelwirkung realisiert. Bevorzugt ist es, dass das Hebelelement selbst als Elastomerkörper und/oder als Dämpfungselement ausgebildet ist bzw. einen Elastomerkörper und/oder ein Dämpfungselement aufweist. Durch das Hebelelement selbst erfolgt somit ein Dämpfen der Bewegung des Gepäcks, insbesondere der Packtaschen.

Beispielsweise kann es sich bei den beiden Verbindungteilen jeweils um zwei insbesondere koaxial angeordnete Rohrelemente mit unterschiedlichem Durchmesser handeln. Zwischen den beiden Rohrelementen ist sodann ein insbesondere kreisringförmig ausgebildetes Dämpfungselement angeordnet, das beispielsweise als Elastomerkörper oder Elastomerschaum ausgebildet sein kann. Das Dämpfungselement ist mit der Außenseite des inneren Rohrelements sowie mit der Innenseite des äußeren Rohrelements fest, d.h. insbesondere stoffschlüssig und/oder formschlüssig, verbunden. Vorzugsweise ist ein Rohrelement des einen Verbindungsteils mit einem Rohrelement des anderen Verbindungsteils über das Hebelelement miteinander verbunden. Hierbei ist eine Verbindung der beiden inneren Rohrelemente oder der beiden äußeren Rohrelemente, aber auch eines inneren mit einem äußeren Rohrelements, über das Hebelelement möglich. Die jeweils nicht mit dem Hebelelement verbundenen Rohrelemente sind entweder mit dem Gepäckaufnahmeelement verbunden oder mit dem Fahrradrahmenelement verbindbar bzw. in montiertem Zustand verbunden. Die beiden Rohrelemente können somit gegeneinander verdreht werden, wobei aufgrund der Verformung des zwischen den Rohrelementen angeordneten Elastomerkörpers oder dgl. eine Dämpfung der Verdrehung erfolgt.

Zusätzlich oder alternativ zu der Dämpfung durch die zwischen den Rohrelementen vorgesehenen Dämpfungselemente kann auch eine Dämpfung der Bewegung durch ein als Elastomerkörper und/oder Dämpfungselement ausgebildetes Hebelelement erzielt werden.

Ferner wird eine Rückstellkraft erzeugt, die die beiden Rohrelemente wieder in ihre Ausgangsstellung zurückbewegt, sobald die Belastung nicht mehr auftritt.

Mit dem inneren Rohrelement eines der Verbindungsteile ist beispielsweise ein bogenförmig ausgestaltetes Bauteil des Gepäckaufnahmeelements verbunden, in das beispielsweise Halterungen einer Gepäcktasche eingehängt werden können. Mit dem inneren Rohrelement des anderen Verbindungsteils ist beispielsweise ein Trägerelement des Gepäckträgers verbunden. Bevorzugt ist es, dass das mindestens eine Verbindungselement, insbesondere alle Verbindungselemente in montiertem Zustand im Wesentlichen nur eine Horizontalbewegung des zu transportierenden Gepäcks ermöglichen. Hierbei sind geringe Bewegungen des Gepäcks in Längsrichtung des Fahrrads und quer zur Fahrtrichtung ebenfalls zugelassen, wobei es sich hierbei um geringe Federwege von insbesondere jeweils weniger als 5 mm bis 10 mm handelt.

In einer weiteren bevorzugten Ausführungsform sind mindestens ein, insbesondere zwei obere Verbindungselemente und ein unteres Verbindungselement vorgesehen. Hierbei können die beispielsweise zwei oberen Verbindungselemente mit einem Querträger eines Gepäckträgers oder einem anderen Fahrradrahmenelement verbunden sein. Ein weiteres unteres Verbindungselement ist vorzugsweise in einem Bereich mit einem Fahrradrahmenelement verbunden, in dem ein unterer Bereich des Gepäckaufnahmeelements angeordnet ist.

Das Gepäckaufnahmeelement weist in bevorzugter Ausführungsform eine dreieckige, vorzugsweise eine trapezförmige Grundstruktur auf. In montiertem Zustand ist es bevorzugt, dass das Gepäckaufnahmeelement ein oberes Trägerelement aufweist, das vorzugsweise horizontal verläuft. Das obere Trägerelement ist mit einem oder beispielsweise zwei Verbindungselementen verbunden. Hierbei können in einem horizontalen Abstand zueinander zwei obere Verbindungselemente, aber auch gegebenenfalls ein längeres sich über einen Großteil der Länge des oberen Trägerelements erstreckendes Verbindungselement vorgesehen sein. Vorzugsweise weist das Gepäckaufnahmeelement ein unteres Trägerelement auf, das in montiertem Zustand ebenfalls horizontal verläuft. Hierbei kann das untere Trägerelement vorzugsweise parallel zum oberen Trägerelement verlaufen. Bei einer trapezförmigen Ausgestaltung des Gepäckaufnahmeelements ist es bevorzugt, dass das untere Trägerelement kürzer ist als das obere Trägerelement.

Nachfolgend wird die Erfindung anhand bevorzugter Ausführungsformen unter Bezugnahme auf die anliegenden Zeichnungen näher erläutert.

Es zeigen:
- Fig. 1: eine schematische Seitenansicht eines Fahrradrahmens mit Gepäckträger ohne erfindungsgemäße Gepäckhalterung,
- Fig. 2: eine schematische Rückansicht eines Fahrradrahmens mit erfindungsgemäßer Gepäckhalterung,
- Fig. 3: eine schematische Draufsicht einer bevorzugten Ausführungsform eines Gepäckaufnahmeelements der Gepäckhalterung,
- Fig. 4: eine schematische Schnittansicht einer bevorzugten Ausführungsform eines Verbindungselements,
- Fig. 5: eine schematische Schnittansicht einer weiteren Ausführungsform eines Verbindungselements,
- Fig. 6: eine schematische Schnittansicht einer weiteren Ausführungsform eines Verbindungselements und
- Fig. 7: einen schematischen Längsschnitt des in Fign. 5 und 6 dargestellten Verbindungsteils.

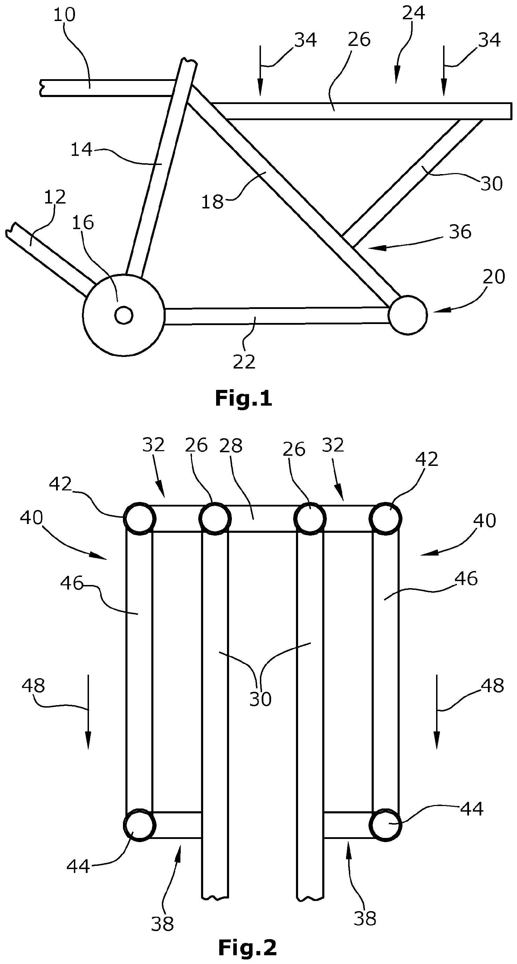

Ein Fahrradrahmen, dessen Hinterbau in Fig. 1 schematisch dargestellt ist, weist ein Oberrohr 10, ein Unterrohr 12 und ein Sattelrohr 14 auf. Das Unterrohr 12 sowie das Sattelrohr 14 sind beispielsweise mit einem Tretlagergehäuse 16 verbunden. Das Oberrohr 10 ist bei dem schematisch dargestellten Fahrradrahmen mit dem Sattelrohr 14 verbunden und verläuft im Wesentlichen horizontal.

Ein Hinterbau des Fahrradrahmens weist üblicherweise zwei Sattelstreben 18 auf, die mit dem Sattelrohr 14 verbunden sind und im Wesentlichen schräg nach unten jeweils zu einem Ausfallende 20 verlaufen. Mit dem Ausfallende 20 ist die Hinterradnabe verbunden. Des Weiteren sind zwischen den Ausfallenden 20 und dem Tretlagergehäuse 16 untere Streben 22 bzw. Kettenstreben verbunden. Im dargestellten Ausführungsbeispiel handelt es sich um einen Fahrradrahmen mit ungefedertem Hinterbau.

Im dargestellten Ausführungsbeispiel ist mit den beiden Sattelstreben 18 ein Gepäckträger 24 verbunden. Der Gepäckträger 24 weist obere horizontal verlaufende Trägerelemente 26 auf, die über ein Zwischenelement 28 (Fig. 2) miteinander verbunden sind. Die oberen Trägerelemente 26 sind über Stützträger 30 mit den Sattelstreben 18 bzw. dem Ausfallende 20 fest verbunden.

Erfindungsgemäß ist eine Gepäckträgerhalterung ausgebildet, die beispielsweise zwei obere Verbindungselemente 32 (Fig. 2) aufweist. Die beiden oberen Verbindungselemente 32 sind in dem durch die Pfeile 34 bezeichneten Bereichen mit den oberen Trägerelemente 26 des Gepäckträgers 24 verbunden. In einem mit einem Pfeil 36 bezeichneten Bereich ist jeweils ein unteres Verbindungselement 38 (Fig. 2) angeordnet.

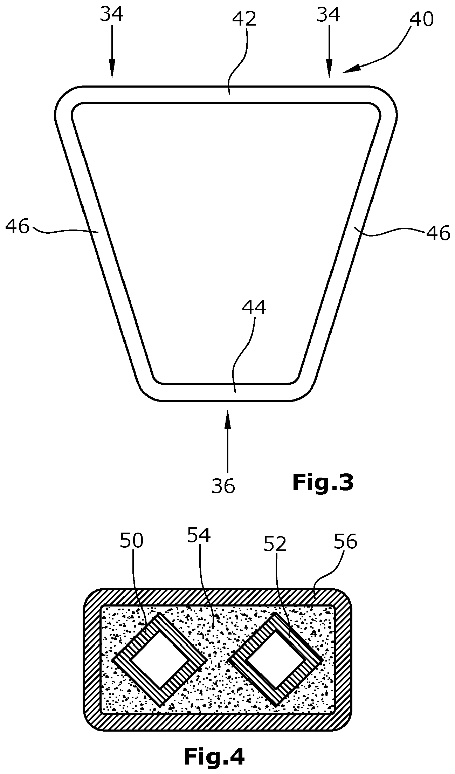

Die erfindungsgemäße Gepäckhalterung weist ferner ein Gepäckaufnahmeelement 40 auf. Dieses ist im dargestellten Ausführungsbeispiel trapezförmig ausgebildet und weist ein oberes Trägerelement 42 auf. Zu diesem ist ein unteres Trägerelement 44 gegenüberliegend und insbesondere parallel angeordnet. In montiertem Zustand sind die beiden Trägerelemente 42, 44 vorzugsweise im Wesentlichen horizontal angeordnet. Beispielsweise ist es möglich, an dem oberen, insbesondere rohr- oder stabförmig ausgebildeten Trägerelement 42 eine Packtasche oder dergleichen einzuhängen. Die beiden Trägerelemente 42, 44 sind über Verbindungsstreben 46 miteinander verbunden. Beim Vorsehen von zwei oberen Verbindungselementen 32 (Fig. 2) sind diese mit dem oberen Trägerelement 42 des Gepäckaufnahmeelements 40 im Bereich der Pfeile 34 (Fig. 3) angeordnet. Entsprechend ist das untere Verbindungselement 38 im Bereich des Pfeils 36 mit dem unteren Trägerelement 44 verbunden.

Die Verbindungselemente 32, 38 sind in besonders bevorzugter Ausführungsform derart ausgebildet, dass einerseits eine Dreh- bzw. Schwenkbewegung ermöglicht wird und andererseits eine Dämpfung der Bewegung erfolgt. Insbesondere ist es möglich, dass das Gepäckaufnahmeelement 40 jeweils in Richtung eines Pfeils 48 vertikal verschiebbar ist.

Bei einer Bewegung des Gepäckaufnahmeelements 40 nach unten in Richtung des Pfeils 48 erfolgt ein Verdrehen und/oder Verschwenken der Verbindungselemente 32, 38.

Zur Ermöglichung dieser gedämpften Bewegung können die Verbindungselemente 32, 38 unterschiedlich aufgebaut sein. Beispiele hierfür sind in den Fign. 4 bis 7 dargestellt.

Bei einer ersten Ausführungsform eines Verbindungselements weist dieses entsprechend Fig. 4 zwei im Querschnitt quadratische rohrförmige Verbindungsteile, ein erstes Verbindungsteil 50 und ein zweites Verbindungsteil 52 auf. Das Verbindungsteil 50 ist hierbei fest mit dem Gepäckaufnahmeelement 40 verbunden. Insbesondere kann das erste Verbindungsteil 50 auch das obere Trägerelement 40 ausbilden oder fest mit diesem verbunden sein. Das zweite Verbindungsteil 52 ist fest mit dem Fahrradrahmenelement, insbesondere den oberen Trägerelementen 26 verbunden bzw. verbindbar.

Die beiden Verbindungsteile 50, 52 sind über ein gleichzeitig als Dämpfungselement 54 ausgebildetes Hebelelement, bei dem es sich im dargestellten Ausführungsbeispiel beispielsweise um einen Elastomerkörper handelt, verbunden bzw. vollständig von diesem umgeben. Somit sind die beiden Verbindungsteile 50, 52 innerhalb des Dämpfungselements 54 angeordnet. Bei dem in Fig. 4 dargestellten Ausführungsbeispiel eines Verbindungselements weist dieses ein insbesondere im Querschnitt rechteckiges Gehäuse 56 auf. Dieses ist weder mit dem Gepäckaufnahmeelement 40 noch mit einem Fahrradrahmenelement verbunden. Vielmehr ist hierdurch das Dämpfungselement 54 fixiert, wobei ein derartiges Gehäuse nicht unbedingt vorgesehen sein muss.

Beim Überfahren einer Unebenheit wie einer Bordsteinkante oder dergleichen wird das erste Verbindungsteil 50 aufgrund der Masse des transportierten Gepäcks vertikal nach unten bewegt. Dies führt zu einem Verdrehen des Rahmenelements 56 und einem entsprechenden Verformen des Dämpfungselements 54. Dies führt zur Dämpfung der Bewegung. Ferner entsteht ein Rückstellmoment.

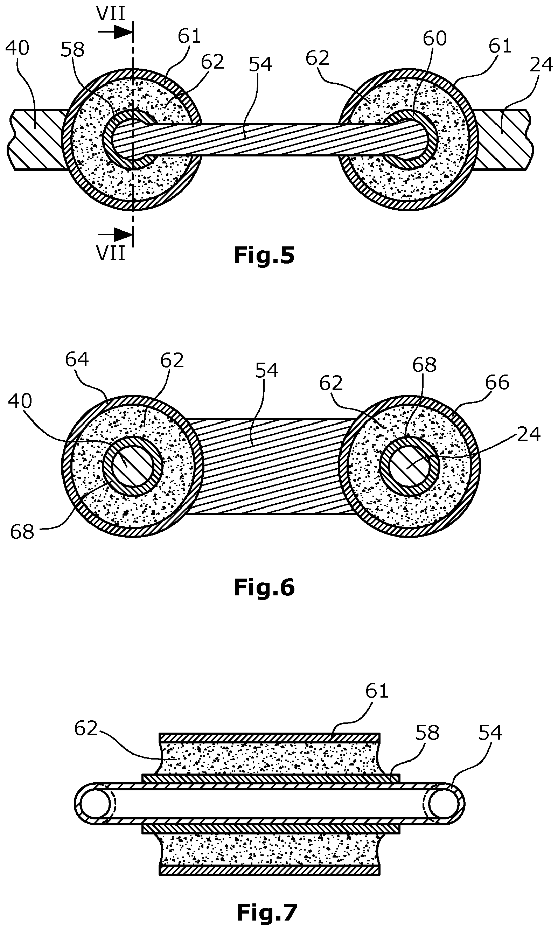

Bei einer weiteren Ausführungsform eines Verbindungselements sind die beiden Verbindungsteile rohrförmig wie in Fign. 5 bis 7 dargestellt ausgebildet. Beispielsweise ist ein erstes Verbindungsteil 58 innerhalb eines koaxial zu dem ersten Verbindungsteil 58 angeordneten rohrförmigen Teils 61 angeordnet. Zwischen dem Verbindungsteil 58 und dem rohrförmigen Teil 61 ist zur Dämpfung ein Elastomerkörper 62 angeordnet. Des Weiteren ist ein zweites Verbindungsteil 60 vorgesehen, das ebenfalls von einem rohrförmigen Teil 61 umgeben ist, wobei zwischen dem innen liegenden zweiten Verbindungsteil 60 und dem koaxial hierzu angeordneten rohrförmigen Teil 61 ein Elastomerkörper 62 zur Dämpfung vorgesehen ist.

In dem in Fig. 5 dargestellten Ausführungsbeispiel sind die beiden innen liegenden Verbindungsteile 58, 60 über ein beispielsweise in Draufsicht U- oder rahmenförmig ausgebildetes Hebelelement 54 miteinander verbunden. Das Hebelelement 54 kann ähnlich eines Bügels in die beiden Verbindungsteile 58, 60 eingesteckt und mit diesen fest verbunden sein. Das Hebelelement 54 kann hierbei starr ausgebildet sein, wobei die Dämpfung der Bewegung sodann über die beiden Dämpfungselemente 62 erfolgt, die im dargestellten Ausführungsbeispiel kreisringzylindrisch ausgebildet sind. Ebenso kann das Hebelelement 54 auch als Elastomerkörper ausgebildet oder aus einem elastischen bzw. dämpfenden Material hergestellt sein. Hierbei ist die Anordnung der Verbindungsteile aus 58, 60, 61 und 62 nicht erforderlich. Bei biegeelastischer Ausführung von Hebelelement 54 (wie z.B. Elastomerkörper, Blattfeder) kann dieses direkt mit dem Gepäckaufnahmeelement 40 bzw. dem Gepäckträger 24 verbunden sein. Die beiden ringförmigen Teile 61 sind in dem in Fig. 5 dargestellten Ausführungsbeispiel einerseits mit dem Gepäckträger 24 und andererseits mit dem Gepäckaufnahmeelement 40 verbunden.

Bei der in Fig. 6 dargestellten Ausführungsform sind dieselben aus zwei koaxial angeordneten Rohrelementen ausgebildeten Bauteile vorgesehen. In diesem Fall bildet das äußere rohrförmige Teil 64 das erste Verbindungsteil und das äußere rohrförmige Teil 66 das zweite Verbindungsteil. Die beiden Verbindungsteile 64, 66 sind wiederum über ein Hebelelement 54, das starr oder elastisch ausgebildet sein kann, verbunden. Die beiden innen liegenden rohrförmigen Teile 68 sind in dem in Fig. 6 dargestellten Ausführungsbeispiel mit dem Gepäckträger 24 bzw. dem Gepäckaufnahmeelement 40 verbunden.

Zwischen den beiden ringzylindrisch ausgebildeten Elementen 64, 68 bzw. 66, 68 ist wiederum ein zur Dämpfung dienender Elastomerkörper 62 angeordnet.

Die beiden in Fign. 5 und 6 dargestellten Ausführungsformen können auch miteinander kombiniert werden.

Jedes einzelne der aus zwei koaxialen ringförmigen Elementen bestehenden Bauteile weist im Längsschnitt vorzugsweise die in Fig. 7 dargestellte Ausgestaltung auf, wobei in Fig. 7 als Beispiel ein Längsschnitt des entsprechenden Bauteils in Fig. 5 dargestellt ist, wobei der Schnitt mit VII-VII bezeichnet ist.

Entsprechende Gepäckhalterungen können nicht nur wie vorstehend beschrieben an einem Gepäckträger 24, sondern beispielsweise auch an einer Fahrradgabel angeordnet werden. Auch eine Anordnung am Oberrohr 10 des Fahrradrahmens ist möglich.

## Patentansprüche

1. Gepäckhalterung für Fahrräder, mit
einem Gepäckaufnahmeelement (40) zur Aufnahme und/oder Befestigung von Gepäck und
mindestens einem Verbindungselement (32, 38) zum Verbinden des Gepäckaufnahmeelements (40) mit einem Fahrradrahmenelement (24),
**dadurch gekennzeichnet, dass**
das mindestens eine Verbindungselement (32, 38) flexibel, insbesondere gelenkig mit dem Fahrradrahmenelement (24) verbindbar und/oder mit dem Gepäckaufnahmeelement (40) verbunden ist, insbesondere damit in montiertem Zustand im Wesentlichen nur eine Vertikalbewegung des Gepäckaufnahmeelements (40) ermöglicht ist.

2. Gepäckhalterung für Fahrräder nach Anspruch 1, **dadurch gekennzeichnet, dass** das Verbindungselement (32, 38) mindestens ein Dämpfungselement (54, 62) aufweist, das zwischen dem Gepäckaufnahmeelement (40) und dem Fahrradrahmenelement (24) angeordnet ist.

3. Gepäckhalterung für Fahrräder nach Anspruch 2, **dadurch gekennzeichnet, dass** das Dämpfungselement (54, 62) in zumindest eines der Verbindungselemente (32, 38) integriert ist.

4. Gepäckhalterung für Fahrräder nach einem der Ansprüche 1 bis 3, **dadurch gekennzeichnet, dass** das mindestens eine Verbindungselement (32, 38) ein erstes mit dem Gepäckaufnahmeelement (40) verbundenes Verbindungsteil (50, 61, 64) und ein zweites mit dem Fahrradrahmenelement (24) verbindbares Verbindungsteil (52, 61, 68) aufweist.

5. Gepäckhalterung für Fahrräder nach Anspruch 4, **dadurch gekennzeichnet, dass** das Verbindungselement (32, 38) ein die beiden Verbindungsteile (50, 61, 64; 52, 61, 68) miteinander verbindendes Hebelelement (54) aufweist.

6. Gepäckhalterung für Fahrräder nach Anspruch 5, **dadurch gekennzeichnet, dass** das Hebelelement (54) als Elastomerkörper und/oder als Dämpfungselement und/oder als Federelement ausgebildet ist.

7. Gepäckhalterung für Fahrräder nach Anspruch 5 oder 6, **dadurch gekennzeichnet, dass** das insbesondere als Elastomerkörper und/oder Dämpfungselement ausgebildete Hebelelement (54) zumindest teilweise von einem insbesondere starren Gehäuse (56) umgeben ist.

8. Gepäckhalterung für Fahrräder nach einem der Ansprüche 1 bis 7, **dadurch gekennzeichnet, dass** mindestens ein, insbesondere zwei obere Verbindungselemente (32) und mindestens ein unteres Verbindungselement (38) vorgesehen sind.

9. Gepäckhalterung für Fahrräder nach einem der Ansprüche 1 bis 8, **dadurch gekennzeichnet, dass** das Gepäckaufnahmeelement (40) eine dreieckige, vorzugsweise trapezförmige Grundstruktur aufweist.

10. Gepäckhalterung für Fahrräder nach einem der Ansprüche 1 bis 9, **dadurch gekennzeichnet, dass** das Gepäckaufnahmeelement (40) ein oberes Trägerelement (42) aufweist, das vorzugsweise mit dem mindestens einen oberen Verbindungselement (32) verbunden ist.

11. Gepäckhalterung für Fahrräder nach einem der Ansprüche 1 bis 10, **dadurch gekennzeichnet, dass** das Gepäckaufnahmeelement ein unteres Trägerelement (44) aufweist, dass vorzugsweise mit dem mindestens einen unteren Verbindungselement (38) verbunden ist.
